# EUROPÄISCHE PATENTSCHRIFT

(11) **EP 0 471 146 B1**
(45) Veröffentlichungstag und Bekanntmachung des Hinweises auf die Patenterteilung: **17.11.1994**
(21) Anmeldenummer: 91104733.0
(22) Anmeldetag: 26.03.1991
(51) Int. Cl.: G01G 11/08

(54) **Gravimetrische Dosiervorrichtungen für Schüttgüter**
Gravimetric dosing devices for bulk materials
Dispositifs pour le dosage gravimétrique de matériaux en vrac

(30) Priorität: 17.08.1990 DE 4026043
(43) Veröffentlichungstag der Anmeldung: 19.02.1992
(73) Patentinhaber: Pfister GmbH, 86165 Augsburg (DE)
(72) Erfinder: Häfner, Hans Wilhelm, W-8890 Aichach-Walchshofen (DE)
(74) Vertreter: Kahler, Kurt, Dipl.-Ing.

(56) Entgegenhaltungen:
- EP-A- 0 198 956
- DE-C- 3 514 910
- FR-A- 2 526 541

## Beschreibung

Die Erfindung betrifft gravimetrische Dosiervorrichtungen für Schüttgüter gemäß den Oberbegriffen der Patentansprüche 1,3,4.

Aus der DE-PS 32 17 406 ist eine Vorrichtung zum kontinuierlichen gravimetrischen Dosieren von schüttfähigem Gut bekannt, das über eine Ausgabeöffnung in Taschen eines in einem Gehäuse angeordneten, sich um eine vertikale Achse drehbaren Rotors geleitet und unter Zuführen von Druckluft über eine zur Ausgabeöffnung in Drehrichtung des Rotors versetzte Entleerungsöffnung entfernt wird. Das Gehäuse ist schwenkbar um eine im wesentlichen horizontale Achse gelagert und mit einer entfernt von dieser Achse angeordneten Kraftmeßvorrichtung verbunden und an der Ausgabeöffnung und der Entleerungsöffnung ist je ein elastisches Anschlußglied vorgesehen. Die horizontale Achse verläuft dabei durch die Mitten der elastischen Anschlußglieder, so daß Kräfte, die durch Verwindungen bei der Belastung der Dosiervorrichtung auftreten könnten, unwirksam sind.

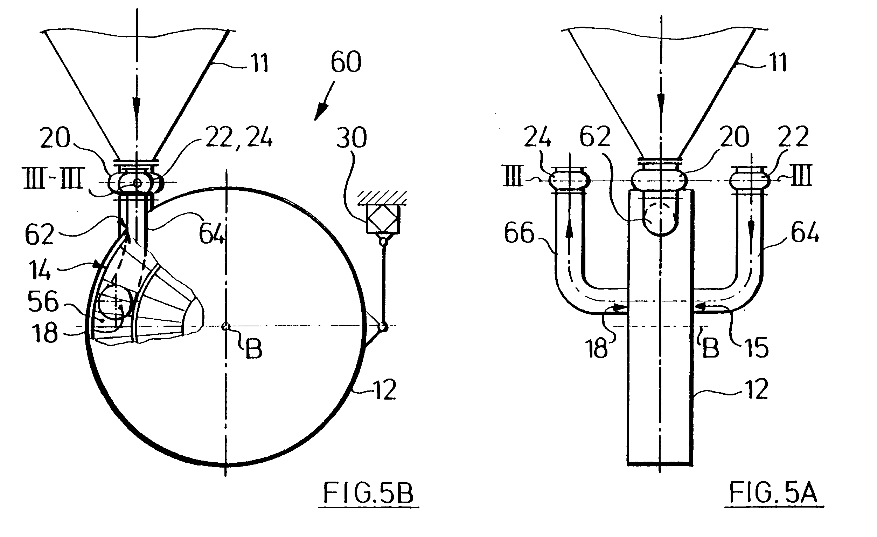

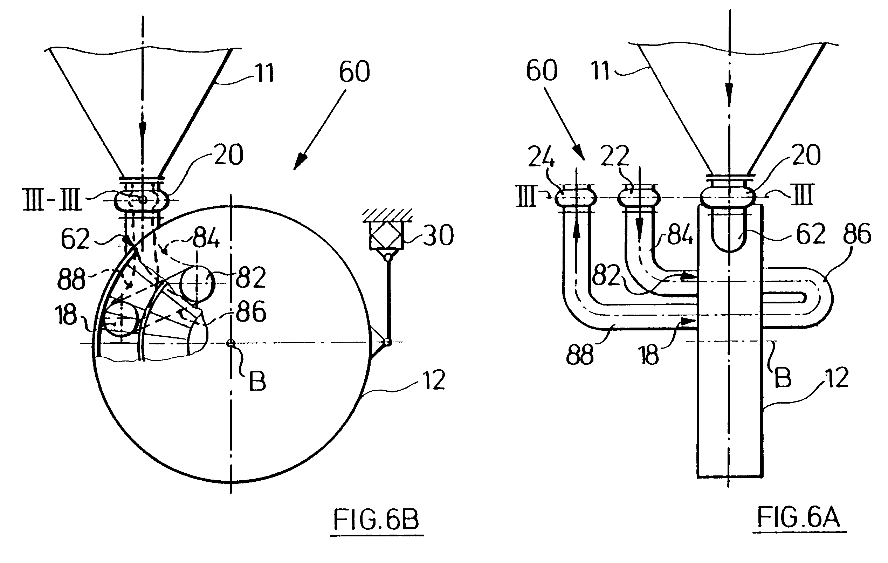

Mit einer derartigen Dosiervorrichtung läßt sich eine verhältnismäßig hohe Genauigkeit erzielen. Die Anordnung der Kompensatoren in der horizontalen Schwenkachse begrenzt jedoch die Anschlußmöglichkeiten der pneumatischen Förderleitungen an der Entleerungsstation im wesentlichen auf das in der genannten Patentschrift insbesondere anhand der Figuren 5 und 6 beschriebenen Ausführungsbeispiel.

Der Erfindung liegt deshalb die Aufgabe zugrunde, eine gravimetrische Dosiervorrichtung für Schüttgüter anzugeben, bei der die verschiedensten Anschlußmöglichkeiten für das pneumatische Fördersystem bei Beibehaltung der hohen Genauigkeit gegeben sind.

Ferner soll die für die Abförderung verwendete Druckluft gleichzeitig zur Innenreinigung des Rotors der Vorrichtung dienen können.

Die erfindungsgemäßen Dosiervorrichtungen besitzen die Merkmale der Patentansprüche 1,3,4.

Bevorzugte Weiterbildungen der erfindungsgemäßen Vorrichtungen sind in den abhängigen Ansprüchen gekennzeichnet.

Weitere Merkmale und Vorteile der erfindungsgemäßen Vorrichtung ergeben sich aus der nachfolgenden Beschreibung anhand der Zeichnung.

### Es zeigen

- Fig. 1A: eine schematische Seitenansicht der Vorrichtung zur Erläuterung des grundsätzlichen Aufbaus;
- Fig. 1B: eine um 90° versetzte Seitenansicht der Vorrichtung nach Fig. 1A;
- Fig. 1C: eine schematische Draufsicht auf das teilweise weggebrochene Gehäuse der Vorrichtung nach Fig. 1A;
- Fig.2A-C: Ansichten ähnlich Fig. 1A-C eines Ausführungsbeispieles der erfindungsgemäßen Vorrichtung;
- Fig.3A-B: Ansichten ähnlich der Figuren 1A-B eines Ausführungsbeispieles der erfindungsgemäßen Vorrichtung;
- Fig.4A-B: Ansichten ähnlich Fig. 1A-B eines Ausführungsbeispieles der erfindungsgemäßen Vorrichtung;
- Fig.5A-B: Ansichten ähnlich Fig. 1A-B einer Ausführungsform der erfindungsgemäßen Vorrichtung;
- Fig.6A-B: Ansichten ähnlich Fig. 1A-B einer Ausführungsform der erfindungsgemäßen Vorrichtung;
- Fig.7A-B: Ansichten ähnlich Fig. 1A-B einer Ausführungsform der erfindungsgemäßen Vorrichtung; und
- Fig.8A-B: Ansichten ähnlich Fig. 1A-B einer weiteren Ausführungsform der erfindungsgemäßen Vorrichtung.

Da der Aufbau der kontinuierlich und pneumatisch arbeitenden gravimetrischen Dosiervorrichtung im einzelnen in der genannten DE-PS 32 17 406 beschrieben ist, wird diese Beschreibung zum Inhalt der vorliegenden Patentanmeldung gemacht und es wird nur auf die erfindungswesentlichen Änderungen näher eingegangen.

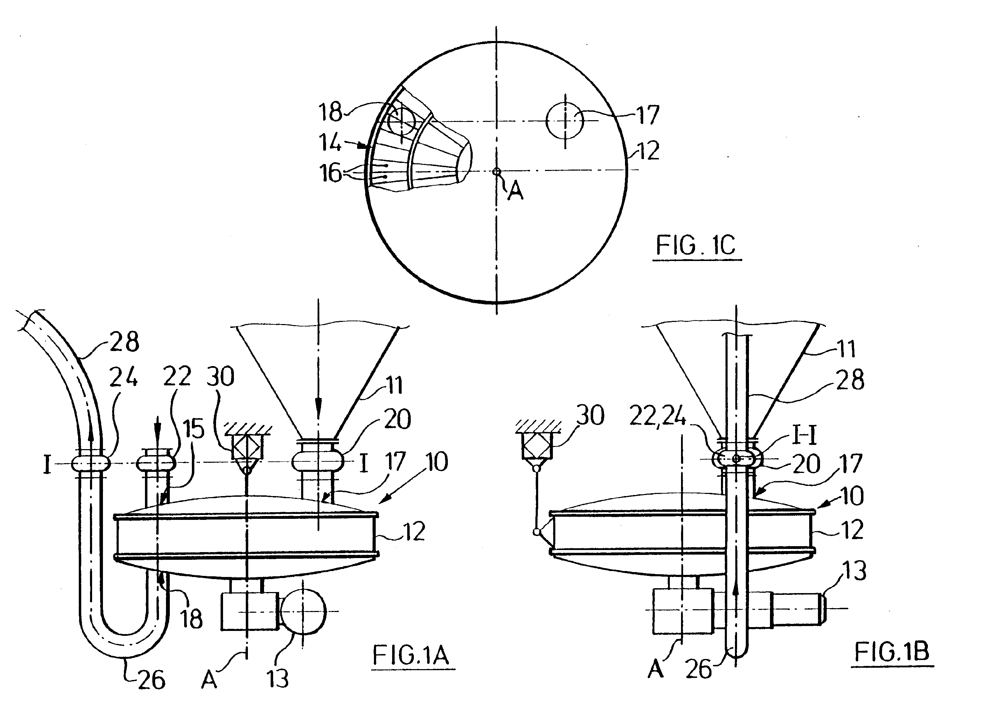

Aus den Figuren 1A bis 1C ist der grundsätzliche Aufbau der gravimetrischen Dosiervorrichtung 10 ersichtlich. In einem zylindrischen Bereich eines Gehäuses 12 ist ein sich um eine im wesentlichen vertikale Achse A über einen Motor 13 antreibbarer Rotor 14 gelagert, bei dem um einen zentralen Innenraum 19 Taschen 16 umfangsmäßig angeordnet sind. Diese laufen unter einer von einem Behälter 11 beschickbaren Aufgabestation, insbesondere Aufgabeöffnung 17 hindurch. Umfangsmäßig versetzt ist im Bereich der Taschen 16 an der Unterseite des Gehäuses 12 an einer Entleerungsstation 18 eine Entleerungsöffnung vorgesehen, durch die das Schüttgut aus den Taschen 16 mittels über eine Eintrittsöffnung 15 zugeführter Druckluft in eine hier aus einem Bogen 26 und einer Förderleitung 28 bestehende Ausgangsleitung geblasen wird.

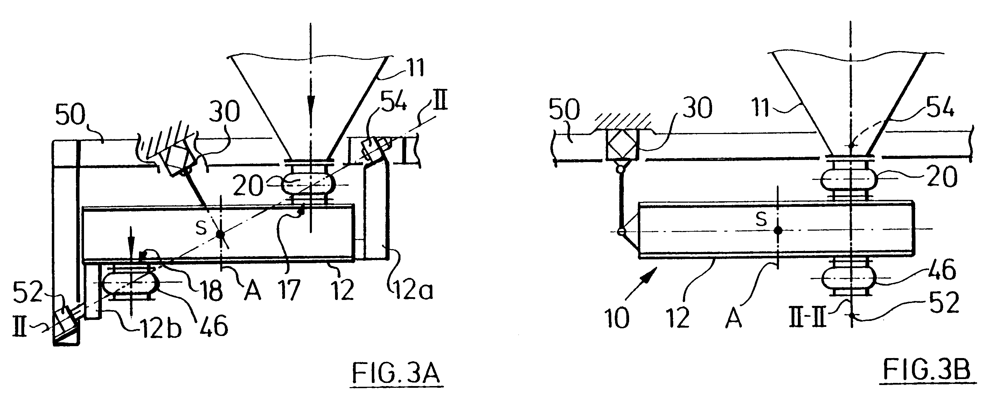

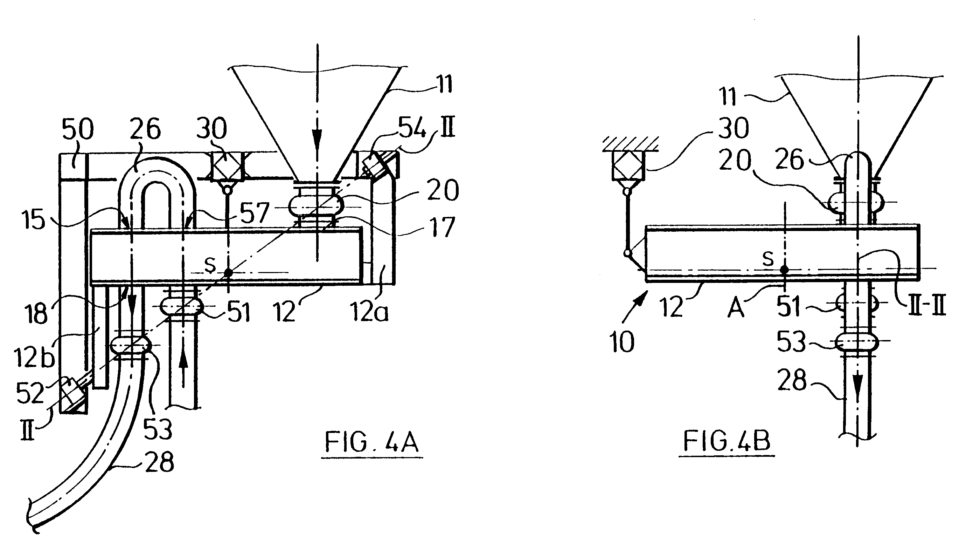

Wie aus der DE-PS 32 17 406 bekannt, ist die Vorrichtung 10 längs einer Achse I-I an einem Gestell 50 (vgl. Fig. 3A und 4A) asymmetrisch aufgehängt. Entfernt von dieser Achse I-I ist eine Kraftmeßvorrichtung 30 mit der Vorrichtung 10 verbunden, mit der die Masse des zwischen der Aufgabeöffnung 17 und der Entleerungsstation 18 in die Taschen 16 gefüllte Schüttgut bestimmt wird. Aufgrund des erheblichen Gewichtes der Vorrichtung 10 läßt sich eine hohe Genauigkeit nur dann erreichen, wenn der Einfluß jeglicher Nebenkräfte ausgeschaltet wird, die bei der geringfügigen Schwenkbewegung der Vorrichtung 10 um die Achse I-I auftreten. Hierzu dienen die elastischen Kompensatoren 20, 22 und 24, die entsprechend an der Aufgabeöffnung 17, der Eintrittsöffnung 15 und in der Ausgangsleitung 26/28 angeordnet sind. Gemäß der Lehre der DE-PS 32 17 406 verläuft dabei die Achse I-I annähernd horizontal durch die Mitten dieser Kompensatoren 20,22 und 24, so daß die bei der Schwenkbewegung der Vorrichtung 10 in ihnen auftretenden Verwindungskräfte praktisch vollkommen bei der Messung eliminiert werden.

Das Ausführungsbeispiel der Fig. 1A bis 1C unterscheidet sich dadurch von der bekannten Anordnung gemäß den Figuren 5 und 6 der DE-PS 32 17 406, daß die Druckluft von oben in das Gehäuse 12 eingeleitet wird, so daß die Entleerung der Taschen 16 durch die Schwerkraft unterstützt wird.

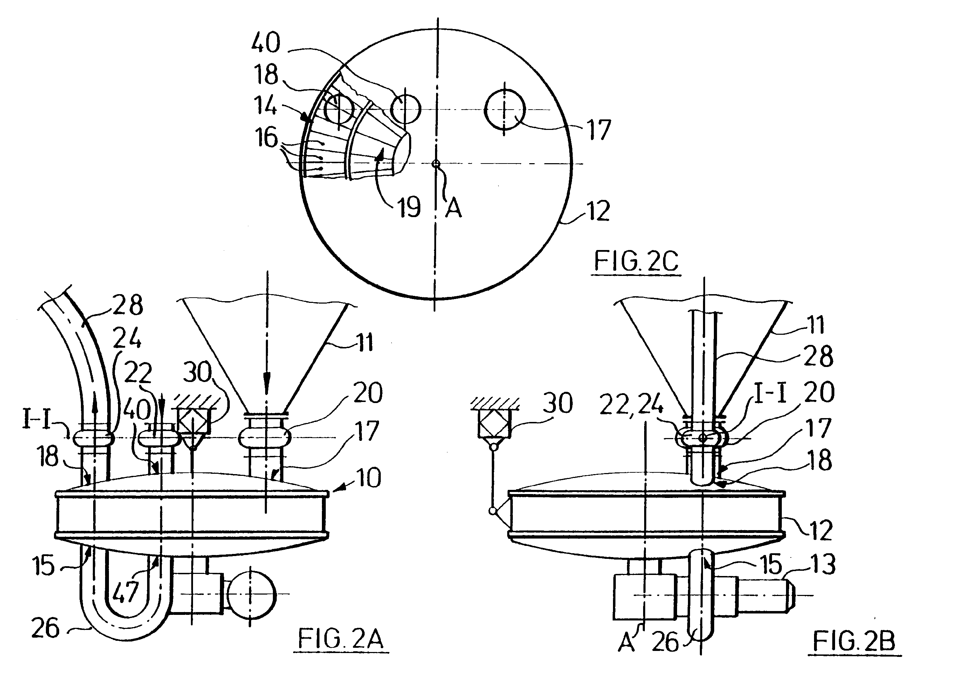

Die Fig. 2A bis 2C zeigen ein Auführungsbeispiel der Erfindung, bei der in kennzeichnender Weise die der Vorrichtung 10 zugeführte Druckluft nicht an der Entleerungsstation 18 direkt zugeführt wird, sondern an einem Einführstutzen 40 durch den offenen Innenraum 19 geleitet wird, bevor sie von einer dem Einführstutzen 40 gegenüberliegenden Austrittsöffnung 47 über den Bogen 26 von unten der Eintrittsöffnung 15 zugeleitet wird. In vorteilhafter Weise kann dadurch der Innenraum 19 aufgrund des Überdruckes von Schüttgut freigehalten werden, das sonst die Neigung hat, aus den Taschen 16 nach innen zu dringen und sich dort anzusammeln.

Beim Ausführungsbeispiel gemäß den Figuren 3A bis 3B wird ein besonderes Merkmal der Erfindung angewendet, das eine erhebliche Variation in den Anschlußmöglichkeiten an der Entleerungsstation gestattet. Abweichend von der Horizontalführung der Achse I-I bei den Ausführungsbeispielen nach den Fig. 1A bis 1C und Fig. 2A bis 2C wird nämlich die Schwenkachse II-II der Vorrichtung 10 nicht mehr waagerecht, sondern unter einem derartigen Winkel zur Horizontalen geführt, daß diese Schwenkachse durch die Mitten von Kompensatoren verläuft, die sowohl oberhalb als auch unterhalb der Vorrichtung 10 angeordnet sein können.

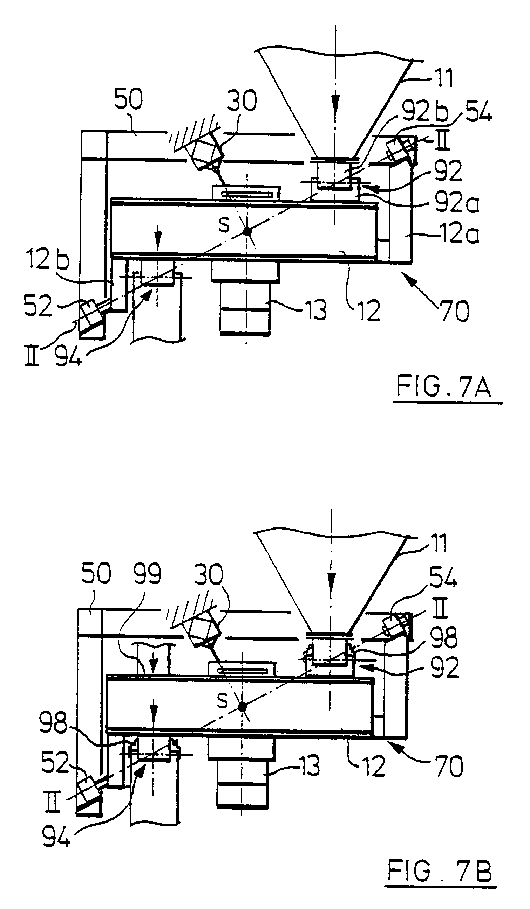

In einfachster Form ist bei dem Ausführungsbeispiel der Fig. 3A bis 3B an der Entleerungsstation 18 ein Kompensator 46 an der Unterseite des Gehäuses 12 derart angebracht, daß die durch den Kompensator 20 verlaufende Schwenkachse II-II durch seine Mitte verläuft. Bei diesem Ausführungsbeispiel wäre auch eine Entleerung in eine nicht gezeigte Ausgangsleitung im freien Fall möglich, wie dies noch näher anhand der Fig. 7A und 7B beschrieben wird.

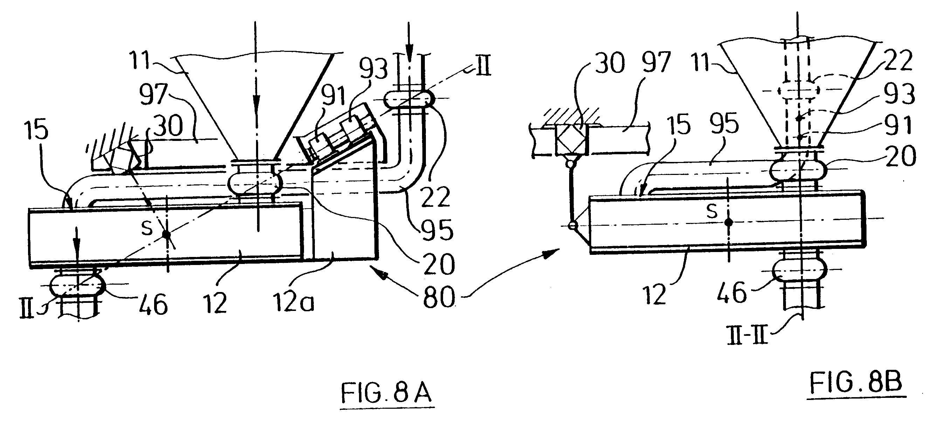

Es sei ange-merkt, daß das Gehäuse 12 der Vorrichtung 10 etwa über abgewinkelte Tragarme 12a, 12b beidseitig in Lagern 52, 54 schwenkbar gelagert ist, die am Gestell 50 in entsprechender Weise angebracht sind, wie dies beispielsweise in der genannten DE-PS 32 17 406 erläutert ist. Auf eine besonders vorteilhafte einseitige Lagerung des Gehäuses 12 wird anhand der Fig. 8A noch weiter eingegangen.

Fig. 3B zeigt wiederum, daß die Vorrichtung 10 in Abstand von der Aufgabeöffnung 17 an einer Kraftmeßzelle 30 aufgehängt ist. Eine Kraftkomponentenaufteilung aufgrund der Schrägstellung der Achse II-II bezüglich der Kraftangriffsrichtung der Kraftmeßzelle 30 läßt sich durch Kalibrierung bzw. Umrechnung ausgleichen.

Bezüglich des Winkels der Schrägstellung der Achse II-II gegenüber der Horizontalen sei bemerkt, daß dieser Winkel sich aus der Höhe des Gehäuses 12 und dem horizontalen Abstand zwischen Aufgabeöffnungsachse und Entleerungsöffnungsachse ergibt und im Bereich zwischen 15 und 45°, insbesondere 20 bis 30° liegen wird.

Aus der Fig. 3A ist ein weiteres Merkmal der erfindungsgemäßen Vorrichtung ersichtlich, die auch bei einem Großteil der beschriebenen Ausführungsbeispiele anwendbar sind.

In diesem Zusammenhang ist zu beachten, daß das Gestell 50 üblicherweise mit dem Behälter 11 starr verbunden ist mit der Gefahr, daß es sich bei unterschiedlicher vertikaler oder gar seitlicher Belastung durch den Behälter 11, wenn auch geringfügig, verzieht. Dies kann eine, wenn auch geringfügige Veränderung der Lage der Schwenkachse II-II zur Folge haben, welche sich erheblich auf das Meßergebnis auswirken kann. Erfindungsgemäß werden derartige Einflüsse dadurch vermieden, daß der Schwerpunkt S der um sie schwenkbaren Einheit, die das Gehäuse 12 mit Rotor 14 und auch den daran angesetzten Motor 13 mit Getriebe umfaßt, in eine die Achse II-II enthaltende Ebene gelegt wird, die in Fig. 3A senkrecht zur Zeichnungsebene verläuft, wobei die vom Schwerpunkt auf die Achse II-II gefällte Senkrechte in Betriebsstellung der Vorrichtung horizontal in der Ebene verläuft.
Ferner kann die Kraftangriffsrichtung der Kraftmeßzelle 30 derart gewählt werden, daß sie möglichst senkrecht auf dieser Ebene steht (vgl. auch Fig. 7A, 7B).

Die Fig. 4A und 4B zeigen ein Ausführungsbeispiel der erfindungsgemäßen Vorrichtung, wobei die kennzeichnenden Merkmale der vorstehenden zwei Ausführungsbeispiele kombiniert sind.

Insbesondere wird die Druckluft über einen Kompensator 51 von unten dem Innenraum 19 (Fig. 2C) zugeführt und über einen Bogen 26 von oben zur Eintrittsöffnung 15 geleitet, so daß die Taschen 16 (Fig. 2C) von oben ausgeblasen werden und das Schüttgut durch die Entleerungsstation 18 über einen Kompensator 53 in die Förderleitung 28 entleert werden. Sowohl der Kompensator 20 als auch die Kompensatoren 51 und 53 liegen wiederum auf der schräg verlaufenden Schwenkachse II-II.

Die Fig. 5A bis 5B und 6A bis 6B zeigen zwei Ausführungsbeispiele einer erfindungsgemäßen Dosiervorrichtung 60, die sich von der Ausführungsform gemäß der DE-PS 32 17 406 und den vorigen Ausführungsformen dadurch unterscheiden, daß der Rotor 14 der Dosiervorrichtung 60 um eine im wesentlichen horizontale Achse B rotiert. Eine Aufgabeöffnung 62 kann vorzugsweise umfangsmäßig, d. h. an der Mantelfläche des Gehäuses 12 angeordnet werden, wenn die Taschen 56 des Rotors 14 radial offen sind.

Die Entleerung erfolgt wiederum pneumatisch mit Zuführung von Druckluft über den Kompensator 22 und ein Rohrknie 64 zur Eintrittsöffnung 15 und Abführung des aus den Taschen 56 ausgeblasenen Schüttguts über ein Rohrknie 66 und den Kompensator 24. Bei diesem Ausführungsbeispiel ist die Dosiervorrichtung 60 schwenkbar um eine Achse III-III an einem nicht gezeigten Gestell, ähnlich dem Gestell 50 der Fig. 3A aufgehängt, die wiederum durch die Mitten der Kompensatoren 20, 22 und 24 verläuft. Die durch die vom Rotor zwischen der Aufgabeöffnung 62 und der Entleerungsöffnung 15 geförderte Schüttgutmasse wird mittels der Kraftmeßzelle 30 festgestellt, an der die Dosiervorrichtung 60 entfernt von der Achse III-III angehängt ist.

In Abwandlung dieser Ausführungsform erfolgt bei der Ausführungsform der Dosiervorrichtung 60 gemäß den Fig. 6A bis 6B wiederum ein Ausblasen des Innenraumes 19 des Rotors 14 (Fig. 2C) mit Druckluftzuführung durch den Kompensator 22 über ein Rohrknie 84 zu einer Drucklufteintrittsöffnung 82, einen Bogen 86 durch die Entleerungsstation 18, ein Rohrknie 88 und den Kompensator 24. Die Schwenkachse III-III verläuft dabei wiederum durch die Mitten der Kompensatoren 20, 22 und 24.

Die Figuren 7A und 7B veranschaulichen ein gegenüber den zuvor beschriebenen Ausführungsbeispielen vereinfachtes, Ausführungsbeispiel einer gravimetrischen Dosiervorrichtung 70, die sozusagen als gravimetrisch messende Schleuse verwendet werden kann, d. h. ohne pneumatische Förderung arbeitet. Hierdurch wird es möglich, anstelle der elastischen Anschlußglieder einfachere Elemente, nämlich kraftfreie Übergangselemente 92, 94 zu verwenden, die im Prinzip aus mit Spiel ineinandergesteckten Rohrstutzen, z. B. 92a, 92b bestehen.

Ist eine gewisse Abdichtung gewünscht, so können die Übergänge wie in Fig. 7B angedeutet, mittels eines flexiblen Materials 98 etwa in Schlauch- oder Balgform abgedeckt werden.

Fig. 7B zeigt ferner, daß die Entleerung des Rotors 14 durch Zuführen von Luft, jedoch unter geringem Druck über eine Lufteintrittsöffnung 99 verbessert werden kann.

Auch bei diesem Ausführungsbeispiel ist in den Figuren 7A und 7B angedeutet, daß die Achse II-II auch in einer Ebene durch den Schwerpunkt einer Einheit verläuft, die durch die um die Achse II-II schwenkbaren Elemente, insbesondere des Gehäuses 12 und des daran angebrachten Motors 13 gebildet wird, wobei die vom Schwerpunkt auf die Achse II-II gefällte Senkrechte in Betriebsstellung der Vorrichtung horizontal in der Ebene verläuft.

Die Fig. 8A und 8B zeigen ein weiteres Ausführungsbeispiel einer erfindungsgemäßen Dosiervorrichtung 80, bei der in Abwandlung zu den vorhergehenden Ausführungsbeispielen die Schwenkachse II-II durch Lager 91, 93 gebildet ist, die einseitig seitlich vom Gehäuse 12 an einem Gestell 97 angeordnet und etwa über einen einzigen gekröpften Tragarm 12a mit dem Gehäuse 12 verbunden sind. Die Luftzufuhr erfolgt hier über den Kompensator 22, eine S-förmige Leitung 95 zur Eintrittsöffnung 15 am Gehäuse 12 unter Entleerung wiederum durch den Kompensator 46. Die Schwenkachse II-II verläuft auch hier durch die Mitten der Kompensatoren 20, 22, 46 und liegt in einer Ebene durch den Schwerpunkt S, der um die Achse II-II schwenkbaren Einheit der Dosiervorrichtung 80, wobei die vom Schwerpunkt S auf die Achse II-II gefällte Senkrechte horizontal verläuft.

Der Vorteil der einseitigen Lagerung besteht darin, daß ein guter Zugang zur Dosiervorrichtung sowohl bei der Montage als auch bei der Wartung gegeben ist.

Aus der vorstehenden Beschreibung ist ersichtlich, daß eine gravimetrische Dosiervorrichtung für Schüttgüter offenbart wird, die in verschiedener Hinsicht erhebliche Vorteile gegenüber der bekannten Anordnung besitzt. In diesem Zusammenhang sei darauf hingewiesen, daß die erfindungswesentlichen Merkmale nicht auf die Verwendung bei der gravimetrischen Dosiervorrichtung nach DE-PS 32 17 406 beschränkt ist, sondern auch bei jeglichen anderen gravimetrischen Dosiervorrichtungen Anwendung finden kann, bei denen eine Beeinträchtigung des Meßergebnisses aufgrund unerwünschter Kräfte an den Verbindungsstellen der Vorrichtung mit Zu- und Ableitungen vermieden werden soll.

## Patentansprüche

1. Vorrichtung (10;70;80) zum kontinuierlichen gravimetrischen Dosieren von schüttfähigem Gut, mit einer Aufgabestation (11,17), einem in einem Gehäuse (12) angeordneten, um eine Achse (A) drehbaren Rotor (14) mit Taschen (16) und einer zur Aufgabestation (11,17) in Drehrichtung des Rotors (14) versetzten Entleerungsstation (18), wobei das Gehäuse (12) schwenkbar um eine Schwenkachse (II-II) gelagert und mit einer entfernt von dieser Schwenkachse angeordneten Kraftmeßvorrichtung (30) verbunden ist, sowie an der Entleerungsstation ein kräftefreier Übergang, insbesondere ein elastisches Anschlußglied (46;94) vorgesehen ist, durch den die Schwenkachse verläuft,
dadurch gekennzeichnet, daß
der kräftefreie Übergang (46;94) an der Entleerungsstation (18) unterhalb des Gehäuses (12) angeordnet ist und die Schwenkachse (II-II) unter einem Winkel zur Horizontalen verläuft.

2. Vorrichtung nach Anspruch 1, dadurch gekennzeichnet, daß für ein pneumatisches Fördersystem zum Zuführen von Druckluft ein weiterer kräftefreier Übergang, insbesondere ein weiteres elastisches Anschlußglied (51) im Bereich eines zentralen Innenraumes (19) des Rotors (14) an einer Seite des Gehäuses (12) angebracht ist, der eine Öffnung (57) auf der anderen Seite des Gehäuses (12) gegenüberliegt, die über eine Leitung (26) mit einer Eintrittsöffnung (15) zum Gehäuse (12) gegenüber der Entleerungsöffnung der Entleerungsstation (18) verbunden ist, wobei der weitere kräftefreie Übergang (51) ebenfalls auf der Schwenkachse (II-II) liegt.

3. Vorrichtung (10) zum kontinuierlichen gravimetrischen Dosieren von schüttfähigem Gut, mit einer Aufgabestation (11,17), einem in einem Gehäuse (12) angeordneten, um eine Achse (A) drehbaren Rotor (14) mit Taschen (16) und einer zur Aufgabestation (11,17) in Drehrichtung des Rotors (14) versetzten Entleerungsstation (18), wobei das Gehäuse (12) schwenkbar um eine Schwenkachse (I-I;II-II) gelagert und mit einer entfernt von dieser Achse (I-I;II-II) angeordneten Kraftmeßvorrichtung (30) verbunden ist, wobei an der Aufgabestation (11,17) und an der Entleerungsstation (18) je ein elastisches Anschlußglied (20,24 bzw. 20,53) vorgesehen ist und die Schwenkachse (I-I;II-II) durch die elastischen Anschlußglieder (20,24 bzw. 20,53) verläuft, sowie mit einem pneumatischen Fördersystem zum Zuführen von Druckluft, dadurch gekennzeichnet, daß ein weiteres elastisches Anschlußglied (22;51) im Bereich eines zentralen Innenraumes (19) des Rotors (14) am Gehäuse (12) angebracht ist, dem eine Ausgangsöffnung (47;57) auf der anderen Seite des Gehäuses (12) gegenüberliegt, die über eine Leitung (26) mit einer Eintrittsöffnung (15) zum Gehäuse (12) gegenüber einer Entleerungsöffnung der Entleerungsstation (18) verbunden ist, wobei das weitere elastische Anschlußglied (22;51) ebenfalls auf der Schwenkachse (I-I;II-II) liegt.

4. Vorrichtung (60) zum kontinuierlichen gravimetrischen Dosieren von schüttfähigem Gut, mit einer Aufgabestation (11,62), einem in einem Gehäuse (12) angeordneten, um eine Achse (B) drehbaren Rotor (14) mit Taschen (56) und einer zur Aufgabestation (11,62) in Drehrichtung des Rotors (14) versetzten Entleerungsstation (18), wobei das Gehäuse (12) schwenkbar um eine Schwenkachse (III-III) gelagert und mit einer entfernt von dieser Achse angeordneten Kraftmeßvorrichtung (30) verbunden ist, wobei an der Aufgabestation (11,62) und an der Entleerungsstation (18) mindestens ein elastisches Anschlußglied (20,22,24) vorgesehen ist und die Schwenkachse (III-III) durch die elastischen Anschlußglieder verläuft, sowie ein pneumatisches Fördersystem zum Zuführen von Druckluft vorgesehen ist, dadurch gekennzeichnet, daß der Rotor (14) um eine im wesentlichen waagerechte Achse (B) drehbar ist und die Schwenkachse (III-III) durch die Mitten der elastischen Anschlußglieder (20,22,24) verläuft.

5. Vorrichtung nach Anspruch 4, dadurch gekennzeichnet, daß die Aufgabeöffnung (62) der Aufgabestation (11,62) an der Mantelfläche des Gehäuses (12) angeordnet ist.

6. Vorrichtung nach Anspruch 4 oder 5, dadurch gekennzeichnet, daß die Schwenkachse (III-III) im wesentlichen waagerecht verläuft.

7. Vorrichtung nach einem der Ansprüche 4 bis 6, dadurch gekennzeichnet, daß eine Drucklufteintrittsöffnung (82) in einen zentralen Innenraum (19) des Rotors (14) und eine äußere Leitung (86) zur Entleerungsöffnung (18) vorgesehen sind.

8. Vorrichtung nach einem der vorhergehenden Ansprüche, dadurch gekennzeichnet, daß die Schwenkachse (II-II) auch in einer Ebene durch den Schwerpunkt (S) der um sie schwenkbaren, den Rotor (14) und das Gehäuse (12) enthaltenden Einheit (10,12,13,14) verläuft und die vom Schwerpunkt (S) auf die Achse (II-II) gefällte Senkrechte in Betriebsstellung der Vorrichtung (70,80) im wesentlichen horizontal verläuft.

9. Vorrichtung nach einem der vorhergehenden Ansprüche, dadurch gekennzeichnet, daß die kraftfreien Übergänge (92,94) mit verhältnismäßig großem Spiel ineinandergesteckte Rohrstutzen (92a,92b) sind, die vorzugsweise mit einem flexiblen Material (98) abgedeckt sind.

10. Vorrichtung nach einem der vorhergehenden Ansprüche, dadurch gekennzeichnet, daß die um die Schwenkachse (I-I;II-II;III-III) schwenkbare, den Rotor (14) und das Gehäuse (12) enthaltende Einheit (10,12,13,14;80) einseitig an einem Gestell (97) mit Lagern (91,93) gelagert ist.

## Claims

1. A device (10;70;80) for the continuous gravimetric dosing of pourable material, comprising a charging station (11,17), a rotor (14) having pockets (16), arranged in a housing (12) and rotatable about an axis (A), and a discharging station (18) offset in respect to said charging station (11,17) in the direction of rotation of said rotor (14), said housing (12) being pivotally supported on a pivot axis (II-II) and being connected to a force measuring device (30) arranged at a remote distance from said pivot axis, a force-free transition, in particular an elastic connecting member (46;94) being provided at the discharging station, the pivot axis passing through the elastic connecting member,
characterized in that
the force-free transition (46;94) is arranged below said housing (12) at said discharging station (18) and the pivot axis (II-II) extends at an angle in respect to the horizontal.

2. The device of claim 1, characterized in that, for a pneumatic feeding system, a further force-free transition, in particular a further elastic connecting member (51), is arranged in the region of a central inner space (19) of said rotor (14) at one side of said housing (12) for supplying pressurized air, having opposed thereto an opening (57) provided at the other side of said housing (12) and connected by a duct (26) with an inlet opening (15) of housing (12) in opposition to the discharging outlet of said discharging station (18), with said further force-free transition (51) being located on said pivot axis (II-II) as well.

3. A device (10) for the continuous gravimetric dosing of pourable material, comprising a charging station (11,17), a rotor (14) having pockets (16), arranged in a housing (12) and rotatable about an axis (A), and a discharging station (18) offset in respect to said charging station (11,17) in the direction of rotation of said rotor (14), said housing (12) being pivotally supported on a pivot axis (I-I;II-II) and being connected to a force measuring device (30) arranged at a remote distance from said pivot axis (I-I; II-II), an elastic connecting member (20,24 or 20,53, respectively) each being provided at the charging station (11,17) and the discharging station (18), said pivot axis (I-I;II-II) passing through said elastic connecting members (20,24 or 20,53, respectively), and a pneumatic feeding system for supplying pressurized air, characterized in that a further elastic connecting member (22;51) is arranged in the region of a central inner space (19) of rotor (14) at housing (12) opposed by an outlet opening (47;57) at the opposite side of said housing (12), connected through a duct (26) with an inlet opening (15) to housing (12) in opposition to a discharging outlet of the discharging station (18), with said further elastic connecting member (22;51) lying on said pivot axis (I-I;II-II) as well.

4. A device (60) for the continuous gravimetric dosing of pourable material comprising a charging station (11,62), a rotor (14) having pockets (56), arranged in a housing (12) and rotatable about an axis (B), and a discharging station (18) offset in respect to said charging station (11,62) in the direction of rotation of said rotor (14), said housing (12) being pivotally supported on a pivot axis (III-III) and being connected to a force measuring device (30) arranged at a remote distance from said pivot axis, at least one elastic connecting member (20,22,24) being provided at the charging station (11,62) and the discharging station (18), said pivot axis (III-III) passing through the elastic connecting members; and a pneumatic feeding system for supplying pressurized air, characterized in that said rotor (14) is rotatable about an essentially horizontal axis (B) and that said pivot axis (III-III) extends through the centers of said elastic connecting elements (20,22,24).

5. The device of claim 4, characterized in that the charging inlet (62) of said charging station (11,62) is provided at the peripheral surface of said housing (12).

6. The device of claim 4 or 5, characterized in that said pivot axis (III-III) extends in an essentially horizontal direction.

7. The device of any of claims 4 to 6, characterized in that there are provided a pressurized air inlet (82) leading into a central inner space (19) of said rotor (14) and an outer duct (86) leading to said discharging station (18).

8. The device of any of the preceding claims, characterized in that said pivot axis (II-II) also extends in a plane through the center of gravity (S) of said pivotable unit (10,12,13,14) comprising said rotor (14) and said housing (12) and that the normal drawn from the center of gravity (S) onto axis (II-II) extends essentially horizontal in operating position of said device (70,80).

9. The device of any of the preceding claims, characterized in that said force-free transitions (92,94) comprise tube stubs (92a,92b) telescoped into each other with a relatively large loose, preferably covered by a flexible material (98).

10. The device of any of the preceding claims, characterized in that said unit (10,12,13,14;80) pivotable about said pivot axis (I-I;II-II;III-III) and comprising said rotor (14) and said housing (12) is unilaterally supported on a frame (97) via bearings (91,93).

## Revendications

1. Dispositif (10 ; 70 ; 80) pour le dosage gravimétrique en continu de produits en vrac, comprenant un poste de chargement (11, 17), un rotor (14) placé dans un carter (12) et pouvant tourner autour d'un axe (A) qui comporte des sachets (16), et un poste de vidage (18) décalé par rapport au poste de chargement (11, 17) dans le sens de rotation du rotor (14), le carter (12) étant monté autour d'un axe de pivotement (II-II) de manière à pouvoir pivoter et relié à un dynamomètre (30) éloigné de cet axe de pivotement, et une transition à force nulle, notamment un organe de raccordement élastique (46 ; 94) à travers lequel passe l'axe de pivotement étant prévu au poste de vidage, caractérisé en ce que la transition à force nulle (46 ; 94) an niveau du poste de vidage (18) est placée en dessous du carter (12), et en ce que l'axe de pivotement (II-II) s'étend avec un angle par rapport à l'horizontale.

2. Dispositif selon la revendication 1, caractérisé en ce que, pour un système d'alimentation pneumatique destiné à amener de l'air comprimé, une autre transition à force nulle, notamment un autre organe de raccordement élastique (51) est fixé sur un côté du carter (12), dans la zone d'un espace intérieur central (19) du rotor (14), transition en face de laquelle est placée une ouverture (57) qui est située sur l'autre côté du carter (12) et qui, par le biais d'une conduite (26), est reliée à une ouverture d'entrée (15) menant au carter (12) et située en face d'une ouverture de vidage du poste de vidage (18), l'autre transition à force nulle (51) étant également située sur l'axe de pivotement (II-II).

3. Dispositif (10) pour le dosage gravimétrique en continu de produits en vrac, comprenant un poste de chargement (11, 17), un rotor (14) placé dans un carter (12) et pouvant tourner autour d'un axe (A) qui comporte des sachets (16), et un poste de vidage (18) décalé par rapport au poste de chargement (11, 17) dans le sens de rotation du rotor (14), le carter (12) étant monté autour d'un axe de pivotement (I-I ; II-II) de manière à pouvoir pivoter et relié à un dynamomètre (30) éloigné de cet axe de pivotement, un organe de raccordement élastique (20, 24 ou 20,53) étant chaque fois prévu au poste de chargement (11, 17) et au poste de vidage (18) et l'axe de pivotement (I-I ; II-II) passant à travers les organes de raccordement élastiques (20, 24 ou 20, 53), et comprenant également un système d'alimentation pneumatique pour amener de l'air comprimé, caractérisé en ce qu'un autre organe de raccordement (22 ; 51) est fixé sur un côté du carter (12), dans la zone d'un espace intérieur central (19) du rotor (14), organe de raccordement en face duquel est placée une ouverture de sortie (47 ; 57) qui est située sur l'autre côté du carter (12) et qui, par le biais d'une conduite (26), est reliée à une ouverture d'entrée (15) menant au carter (12) et située en face d'une ouverture de vidage du poste de vidage (18), l'autre organe de raccordement élastique (22 ; 51) étant également situé sur l'axe de pivotement (I-I ; II-II).

4. Dispositif (60) pour le dosage gravimétrique en continu de produits en vrac, comprenant un poste de chargement (11, 62), un rotor (14) placé dans un carter (12) et pouvant tourner autour d'un axe (B) qui comporte des sachets (56), et un poste de vidage (18) décalé par rapport au poste de chargement (11, 62) dans le sens de rotation du rotor (14), le carter (12) étant monté autour d'un axe de pivotement (III-III) de manière à pouvoir pivoter et relié à un dynamomètre (30) éloigné de cet axe de pivotement, au moins un organe de raccordement élastique (20, 22, 24) étant prévu au poste de chargement (11, 62) et au poste de vidage (18) et l'axe de pivotement (III-III) passant à travers les organes de raccordement élastiques, et un système d'alimentation pneumatique pour amener de l'air comprimé étant prévu, caractérisé en ce que le rotor (14) peut tourner autour d'un axe essentiellement horizontal (B), et en ce que l'axe de pivotement (III-III) passe par les milieux des organes de raccordement élastiques (20, 22, 24).

5. Dispositif selon la revendication 4, caractérisé en ce que l'ouverture de chargement (62) du poste de chargement (11, 62) est placée sur la surface latérale du carter (12).

6. Dispositif selon la revendication 4 ou 5, caractérisé en ce que l'axe de pivotement (III-III) s'étend essentiellement horizontalement.

7. Dispositif selon l'une des revendications 4 à 6, caractérisé en ce que sont prévues une ouverture d'entrée pour l'air comprimé (82) menant dans un espace intérieur central (19) du rotor (14) et une conduite extérieure (86) menant à l'orifice de vidage (18).

8. Dispositif selon l'une des revendications précédentes, caractérisé en ce que l'axe de pivotement (II-II) s'étend également dans un plan passant à travers le centre de gravité (S) de l'unité (10, 12, 13, 14) pouvant pivoter autour de lui et contenant le rotor (14) et le carter (12), et en ce que la perpendiculaire allant du centre de gravité (S) à l'axe (II-II) est essentiellement horizontale lorsque le dispositif (70, 80) est en position de fonctionnement.

9. Dispositif selon l'une des revendications précédentes, caractérisé en ce que les transitions à force nulle (92, 94) sont des tubulures (92a, 92b) emboîtées l'une dans l'autre avec un jeu relativement important, qui sont, de préférence, recouvertes d'un matériau flexible (98).

10. Dispositif selon l'une des revendications précédentes, caractérisé en ce que l'unité (10, 12, 13, 14 ; 80) pouvant pivoter autour de l'axe de pivotement (I-I ; II-II ; III-III) et contenant le rotor (14) et le carter (12) est montée d'un côté sur un bâti (97) au moyen de coussinets (91, 93).
